Europäisches Patentamt

European Patent Office

Office européen des brevets

(11) Veröffentlichungsnummer: **0 273 070 B1**

# EUROPÄISCHE PATENTSCHRIFT

(45) Veröffentlichungstag der Patentschrift: **29.04.92**

(51) Int. Cl.⁵: **G06F 9/30**, G06F 9/22

(21) Anmeldenummer: **86118168.3**

(22) Anmeldetag: **30.12.86**

(54) **Einrichtung und Verfahren zur Erweiterung des Befehlssatzes und der Funktionen eines Rechners.**

(43) Veröffentlichungstag der Anmeldung:
**06.07.88 Patentblatt 88/27**

(45) Bekanntmachung des Hinweises auf die
Patenterteilung:
**29.04.92 Patentblatt 92/18**

(84) Benannte Vertragsstaaten:
**CH DE FR GB IT LI SE**

(56) Entgegenhaltungen:
**GB-A- 2 153 561**

**IBM TECHNICAL DISCLOSURE BULLETIN,
Band 18, Nr. 7, Dezember 1975, Seiten
2250-2252, New York, US; R.L. BAINS et al.:
"Instruction set extension"**

**IBM TECHNICAL DISCLOSURE BULLETIN,
Band 14, Nr. 1, Juni 1971, Seite 298, New
York, US; M. FAIX et al.: "Combined
macro/micro program machine"**

**MICROELECTRONICS & RELIABILITY, Band
24, Nr. 6, 1984, Seiten 1009-1012, Exeter, GB;
R. JAIN et al.: "An alternative approach towards the design of control units"**

(73) Patentinhaber: **International Business Machines Corporation
Old Orchard Road
Armonk, N.Y. 10504(US)**

(72) Erfinder: **Kaufholz, Gerd
Im Stäudach 24
W.-7039 Weil im Schönbuch(DE)**
Erfinder: **Maergner, Jürgen
Beethovenstrasse 11/1
W.-7032 Sindelfingen 6(DE)**
Erfinder: **Schwermer, Hartmut
Wannenstrasse 21
W.-7000 Stuttgart 1(DE)**

(74) Vertreter: **Jost, Ottokarl, Dipl.-Ing.
IBM Deutschland GmbH Patentwesen und
Urheberrecht Schönaicher Strasse 220
W-7030 Böblingen(DE)**

**Beschreibung**

Die Erfindung betrifft eine Einrichtung und ein Verfahren zur Erweiterung des Befehlssatzes eines Rechners, der eine erste Klasse von nicht-redundanten Basisbefehlen und eine zweite Klasse von Befehlen, die vollständig mit Hilfe der nicht-redundanten Basisbefehle realisierbar sind mittels eines Basisrechners ausführt.

Der Befehlssatz eines existierenden Rechners, oder allgemeiner, die Funktionen, die aus einer Menge bestimmter Befehle aufgebaut sind, können normalerweise in eine nicht-redundante Klasse (K1) von Basisfunktionen eingeteilt werden sowie eine Klasse (K2) von Funktionen, die vollständig mit Hilfe der nicht-redundanten Funktionen realisiert werden können.

In der ersten und zweiten Computergeneration bestand das Befehlswerk eines Rechners im allgemeinen aus festverdrahteter Schaltkreislogik, welche nur Basisfunktionen, diese aber direkt ausführen konnte. Nachteile waren dabei die Unübersichtlichkeit des Aufbaus, die Schwierigkeit von nachträglichen Änderungen und insbesondere die hohen Schaltkreiskosten.

Generelle Überlegungen zur Verbesserung der Befehlswerke von Rechnern oder Prozessoren führten zu einer systematischen speichergerechten Struktur der Steuerlogik, die dannn als Mikroprogrammierung bzw. Mikroprogrammsteuerung bezeichnet wurde. M.V. Wilckes hat diese Technik erstmals 1951 vorgestellt: "The best way to design an automatic calculation machine", Manchester University Computer Inaugural Conference, Manchester, England, 1951, Seite 16 sowie 1969 in "The goals of interest in microprogrammings - a literature survey", Computing Surveys, Band 1, September 1969, Seiten 139 b is 145.

Logisch stellt eine Mikroprogrammroutine ein Unterprogramm zur Ausführung eines Maschinen- oder Makrobefehls, d.h. einer Funktion der Klasse 1 oder 2 dar.

Da das Mikroprogramm seinerzeit in Festwertspeichern eingeschrieben wurde, deren Ausgänge direkt auf Hardwareebene fest zugeordnete Steuerfunktionen ausübten, die Ausgangsleitungen, also zum Beispiel Setzleitungen für Register, Leitungen für Torsteuersignale usw., waren und ein Bit in einer Mikroinstruktion an dieser Stelle kennzeichnete, daß die Leitung für diese Mikroinstruktion aktiv werden sollte, wurde die Struktur einer solchen Mikroinstruktion wegen Ihrer Länge (Größenordnung 100 Bits und mehr) horizontal genannt.

Ihr Hauptnachteil ist die schlechte Ausnutzung des Mikroprogrammspeichers. Der Großteil der Speicherkapazität bleibt ineffektiv, da das einzelne Steuersignal nicht für jedes Mikrowort oder Steuerwort benötigt wird und die entsprechenden Speicherbits wegen ihres uncodierten Charakters keine Information tragen.

Das andere Extrem eines Mikroinstruktionsformates ist das vertikale. Es ist dem einer normalen Makroinstruktion sehr ähnlich. Die Funktion der Instruktion wird im Operationscode hochcodiert zusammengefaßt. Der Rest der Instruktion besteht im wesentlichen aus Adreßfeldern, da die Mikroinstruktion im vertikalen Format, im Gegensatz zum horizontalen, auch interne Arbeitsregister adressieren kann.

Die Mikroinstruktion ist damit komplexer; ihr Funktionsgehalt entspricht dem von mehreren, sonst seriell ablaufenden horizontalen Instruktionen. Diese komplexere Funktion muß nun wieder in entsprechende Einzelschritte zerlegt werden, was bei bisher ausgeführten Maschinen im allgemeinen eine schaltkreisverdrahtete Steuerlogik übernommen hat.

Die Mikroinstruktion dient jetzt nur dem Abruf für eine Hardware-Ablaufsteuerung, die in Operationscode und andere Informationen decodiert und in eine Folge von Elementarschritten umgesetzt wird. Es wird durch diese hierarchische Struktur also eine Mehrfachausnutzung der Ablaufsteuerung erzielt. Der Steuerspeicher des vertikalen Formats kann langsamer sein, da die Ausführung wegen der dazwischengeschalteten Steuerlogik länger dauert. Nachteilig beim streng vertikalen Format ist die starke Serialisierung der Steuervorgänge, die sich auf die Verarbeitungsgeschwindigkeit eines Prozessors insgesamt auswirkt.

Einen Kompromiß aus horizontalem und vertikalem Format stellt eine Mikroinstruktion mit codierten Instruktionsfeldern dar, deren Format als quasi-horizontal bezeichnet werden kann. Der Gesamtoperationscode ist hierbei in Unterfunktionen aufgeteilt, die an einzelne Bitgruppen des Formats streng gekoppelt sind. Zusätzlich können noch direkte Steuerbits bzw. ähnliche Funktionselemente eingefügt werden. Es werden mit einer Instruktion auch mehr Funktionen parallel abgedeckt als beim vertikalen Format, wodurch die Instruktionslänge wieder zu Bitzahlen von 50 und mehr anwachsen kann. Die Decodierung ist jetzt gegenüber dem vertikalen Format einfacher und schneller.

Eine Kombination zwischen einer direkt hardwaregesteuerten Maschine und einer interpretativen, d.h. mikroprogrammgesteuerten Maschine, ist im IBM Technical Disclosure Bulletin, Bd. 14, Nr. 1, Juni 1971, Seite 298 beschrieben. Um die Verarbeitungsgeschwindigkeit von mikroprogrammgesteuerten Prozessoren zu erhöhen, ohne jedoch auch die Zahl der Schaltkreise wesentlich zu erhöhen, wird sowohl für die Makro-

2

als auch die Mikroinstruktionen das gleiche Instruktionsformat verwendet. Dieses erlaubt einen Schaltkreisentwurf des Instruktionssteuerwerkes derart, daß einfache Makroinstruktionen für die Durchführung einfacher Funktionen (Elemente der Klasse 1), wie beispielsweise "Lade Register", "Speichere Register im Hauptspeicher" und dergleichen, direkt ausgeführt werden können. Komplexere Makroinstruktionen, wie beispielsweise Gleitkomma-Operationen oder dezimalarithmetische Funktionen (Elemente der Klasse 2), werden jedoch interpretativ ausgeführt, allerdings mit Hilfe von Mikroinstruktionen, die ebenfalls direkt ausführbar sind, wobei sie die gleichen Schaltkreise verwenden. Bei den direkt ausführbaren Mikroinstruktionen handelt es sich aber um die zuvor genannten direkt ausführbaren einfachen Makroinstruktionen, die ebenfalls direkt im Benutzerprogramm auftreten.

Ein Benutzerprogramm besteht daher aus einer Folge von einfachen und komplexen Makroinstruktionen. Wenn die Befehle ausgeführt werden sollen, wird zuvor durch eine Prüfung des Operationscodes festgestellt, ob die gerade zu verarbeitende Instruktion eine solche ist, die direkt ausgeführt werden kann oder eine solche ist, die durch andere direkt ausführbare Instruktionen interpretiert werden muß. In Abhängigkeit von dieser Prüfung wird ein Schalter eingestellt, der die Instruktionssteuereinheit entweder auf die Mikro- oder Makrobetriebsart einstellt. Bei komplexen Makroinstruktionen wird eine Verzweigung zu einer Interpretationseinheit vorgenommen, die eine normale Mikroprogrammsteuerung mit einem Steuerspeicher und einer Instruktionsfolgesteuerung ist. Da alle Makroinstruktionen nun von der Instruktionsausführungs-Hardware ausgeführt werden können, werden die komplexen Makroinstruktionen, ähnlich wie die einfachen Makroinstruktionen, von der Interpretationseinheit zu der Befehlsausführungseinheit übertragen.

Der Nachteil einer solchen Anordnung besteht hauptsächlich darin, daß die Freizügigkeit und Flexibilität beim Entwurf der Prozessorarchitektur und des Befehlssatzes eingeschränkt ist, da zu sehr darauf geachtet werden muß, daß die einfachen Makroinstruktionen zu den komplexen Makroinstruktionen passen und umgekehrt. Außerdem ist es nicht möglich, Mikroprogramme, die mit einem hohen Aufwand an Zeit und Geld für einen bestimmten Rechner oder eine bestimmte Datenverarbeitungsanlage geschrieben wurden, auf einen neuen Rechner oder eine neue Datenverarbeitungsanlage zu übertragen, die beispielsweise in einer anderen Technologie aufgebaut wurde und über neue Funktionen, die bisher nicht verwendet wurden, verfügt.

Dieses ist besonders in wirtschaftlicher Hinsicht ein entscheidender Nachteil der bekannten Mikroprogrammierung.

Die Erfindung soll nun die Aufgabe lösen, eine Einrichtung zu schaffen und ein Verfahren anzugeben, mit deren Hilfe das Funktionsrepertoire eines Rechners, der nur Funktionen der obigen Klasse 1 (K1) ausführen kann, beliebig um Funktionen, die dieser Klasse nicht angehören, ohne Änderung seiner Hardware und seines ggf. vorhandenen Mikroprogramms erweitert werden kann.

Diese Aufgabe wird durch die im Hauptanspruch und Anspruch 7 angegegebenen Merkmale gelöst. Weitere, vorteilhafte Ausgestaltungen und Weiterbildungen des Gegenstandes der Erfindung sind den übrigen Unteransprüchen zu entnehmen.

Die Einrichtung und das Verfahren erlaubt somit Funktionserweiterungen durch Programme, die vom Rechner zwar in einem besonderen Betriebsmodus ausgeführt werden, jedoch ausschließlich aus Befehlssequenzen bestehen, die syntaktisch und vorwiegend auch semantisch der Klasse 1 angehören. Sie können deshalb programmtechnisch wie normale Rechnerprogramme behandelt werden.

Mit Hilfe der Erfindung kann eine existierende Rechnerarchitektur wie folgt realisiert werden:

1. Zerlegung ihrer Funktionsmenge, wie im vorhergehenden Abschnitt angedeutet, in Funktionen der Klasse 1, wie bekannt, sowie eine Klasse (K2) von Funktionen, die vollständig mit Hilfe der nichtredundanten Funktionen realisiert werden können und in eine Klasse (K3) von Funktionen (i.a. komplexe Funktionen), die teilweise, jedoch nur unvollständig, mit Hilfe der Klasse der nicht redundanten Funktionen realisiert werden können.

2. Realisierung eines Rechners, der ausschließlich Funktionen der Klasse 1 ausführen kann, und zusätzlich die Einrichtung enthält, die in dieser Erfindung beschrieben ist.

3. Erstellung der Programme zur Realisierung der Funktionen aus den Klassen 2 und 3.

Gegenüber herkömmlichen Verfahren zur Realisierung einer Rechnerarchitektur bietet das soeben beschriebene Verfahren die folgenden Vorteile:

1. Die Hardware (inklusive eines eventuell notwendigen Mikroprogramms) eines Basisrechners, der nur die Klasse 1-Funktionen der Architektur realisiert, ist billiger und kann erheblich einfacher, schneller und mit geringerem Risiko von Restfehlern entwickelt werden als ein Rechner, der die Gesamtarchitektur realisiert.

2. Zur Entwicklung der Programme, die die Funktionsklassen 2 und 3 realisieren, können alle Methoden und Hilfsmittel, die zur Entwicklung normaler Rechnerprogramme zur Verfügung stehen, verwendet werden. Dies ist möglich, da beide Programmarten äquivalent hinsichtlich des verwendeten Befehlssatzes sind.

Insbesondere können die Programme in bekannten Hochsprachen geschrieben werden und von existierenden Compilern verarbeitet werden. Sie enthalten dann erfahrungsgemäß weniger Fehler als funktionell gleichwertige Mikroprogramme.

3. Die beschriebenen Vorteile ergeben sich bereits bei der erstmaligen Realisierung der Rechnerarchitektur nach der vorliegenden Erfindung.

Jede nochmalige Realisierung der Architektur, die z.B. aufgrund neuer technologischer Möglichkeiten sinnvoll sein könnte, ist ausschließlich auf die Realisierung eines Rechners zur Ausführung der Funktionsklasse 1 in der neuen Technologie beschränkt. Die Programme zur Realisierung der Funktionen der Klasse 2 und 3, die bereits anläßlich einer früheren Realisierung der Gesamtarchitektur erstellt werden, können ungeändert auf dem neuen Rechner verwendet werden.

Im folgenden wird die Erfindung anhand der Figuren näher erläutert. Es zeigen:

Fig. 1 eine schematische Darstellung einer Rechnerstruktur,

Fig. 2 eine tabellarische Darstellung von für den Betrieb der Einrichtung erforderlichen Befehle,

Fig. 3 eine schematische Darstellung einer Aufteilung des Hauptspeichers in verschiedene Bereiche,

Fig. 4 eine schematische Darstellung der allgemeinen Struktur eines Steuervektors,

Fig. 5 eine schematische Darstellung verwendeter Steuervektoren,

Fig. 6 eine schematische Darstellung eines Ereignisvektors EV,

Fig. 7 eine schematische Darstellung eines Zeittaktvektors ZV,

Fig. 8 eine Prinzipdarstellung eines Schaltmechanismus,

Fig. 9 eine Prinzipdarstellung eines Extern/Intern-Diskriminators,

Fig. 10 eine Prinzipdarstellung eines Intern/Extern-Diskriminators,

Fig. 11 eine Prinzipdarstellung eines Umschalters und

Fig. 12 eine Prinzipdarstellung einer Zugriffssteuerung.

Die zusätzliche Einrichtung, die für einen Rechner (Basisrechner), der nur Funktionen der Klasse K1 ausführen kann, vorgesehen ist, verfügt über folgende Merkmale:

1. Einen Modus des Basisrechners, in den der Rechner geschaltet wird, wenn er Programme ausführt, die zur Realisierung von Funktionen der Klassen K2 und K3 dienen. Dieser Modus wird "interner Modus" IM genannt. Er existiert zusätzlich zum normalen Betriebsmodus, der "externer Modus" (EM) genannt wird. Der Rechner arbeitet somit entweder im externen oder internen Modus.

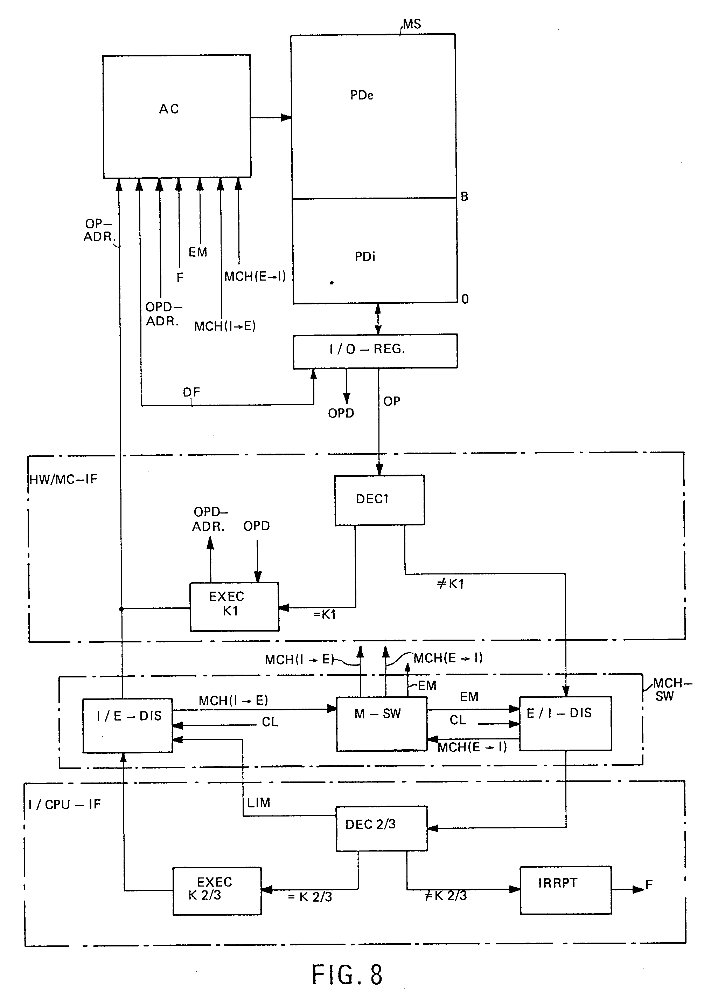

2. Einen Schaltmechanismus MCH-SW; Fig. 8, der unter bestimmten Bedingungen den Rechner vom externen in den internen Modus schaltet und der im internen Modus durch Ausführung eines bestimmten Befehls LIM; Fig. 8 den Rechner in den externen Modus zurückschaltet.

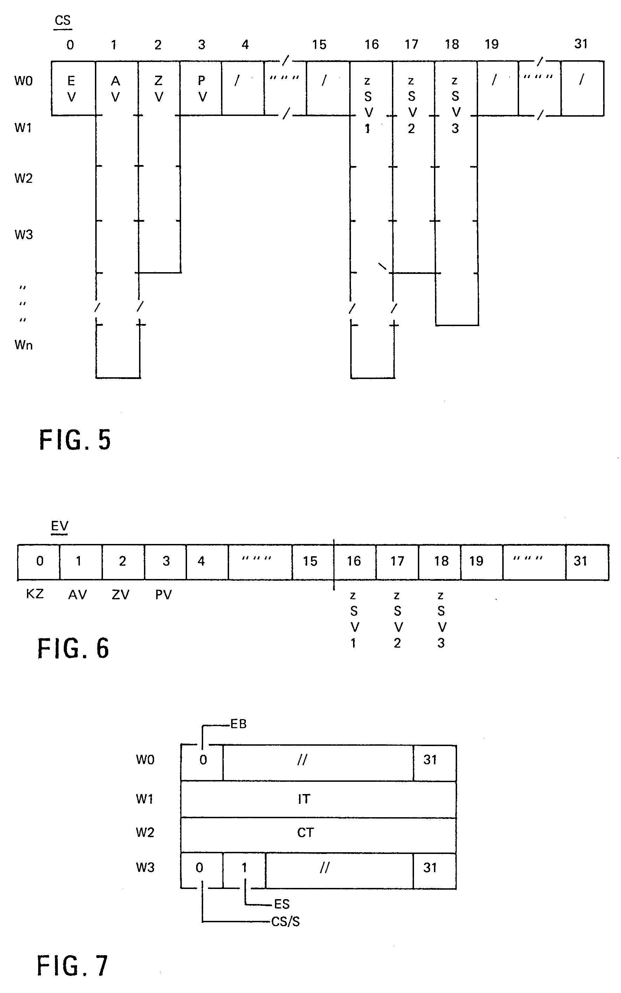

3. Einen Zugriffsmechanismus AG; Fig. 8, der im externen Modus den Zugriff von Programmen auf erste Betriebsmittel (PDe) gestattet und nur im internen Modus die Einbindung von neuen Betriebsmitteln PDi, CS16-31; Fig. 5, K1 ermöglicht, die in der zu realisierenden Gesamtarchitektur nicht definiert sind. Einbindung von neuen Betriebsmitteln bedeutet, daß im internen Modus zusätzliche Befehle zur Verfügung stehen, die die Abfrage und Modifikation des Zustandes dieser Betriebsmittel erlauben. Eine Zustandsänderung dieser Betriebsmittel kann dazu führen, den Basisrechner in den internen Modus zu schalten, sofern er sich zum Zeitpunkt der Zustandsänderung im externen Modus befand.

Der interne Modus IM des Basisrechners existiert zusätzlich zum normalen Betriebsmodus, dem externen Modus EM. Der Basisrechner arbeitet entweder im externen oder im internen Modus.

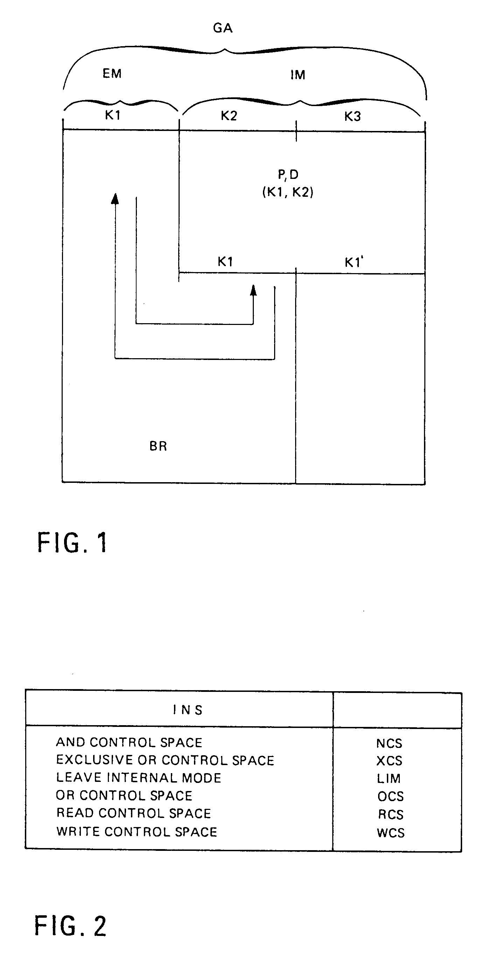

Figur 1 zeigt, daß der Basisrechner BR im externen Modus EM nur Funktionen der Klasse 1 (K1) ausführen kann. Im internen Modus IM kann er zusätzlich zu K1 die Funktionen der Klasse K1' ausführen. Sie werden durch die vorgeschlagene Einrichtung realisiert. Alle Funktionen aus K1', die als Befehle zur Verfügung stehen, sind in Figur 2 aufgelistet. Programme, die im internen Modus ablaufen, können also Befehle aus den Klassen K1 und K1' benutzen. Diese Programme P und Daten D dienen ausschließlich zur Realisierung der Funktionsklassen zwei und drei (K2 und K3) der Gesamtarchitektur:

Programme zur Realisierung von K2 benutzen nur Befehle aus K1, Programme zur Realisierung von K3 benutzen Befehle aus K1 und K1'.

Der Basisrechner arbeitet also immer dann im internen Modus, wenn Funktionen aus den Klassen K2 und K3 der Gesamtarchitektur GA ausgeführt werden.

Der Moduswechsel MCH ist in Figur 1 angedeutet. Er regelt zwei komplementäre Vorgänge:

- Das Umschalten MCH (E→ I) des Basisrechners vom externen in den internen Modus.
- Das Umschalten MCH (I→ E) des Basisrechners vom internen in den externen Modus.

Extern nach Intern: Der Basisrechner schaltet vom externen in den internen Modus um, wenn er sich im externen Modus befindet und ein Ereignis in einem Ereignisvektor EV (Fig. 5) angezeigt wird. Der Umschaltvorgang MCH (E→ I) läuft wie folgt ab:

1. Die augenblicklich ausgeführte Funktion im externen Modus wird abgeschlossen.

2. Der Zustandsvektor Ze des Rechners, der zur weiteren Ausführung des augenblicklich aktiven Programms im externen Modus erforderlich ist, wird intern im Rechner gespeichert.

3. Ein standardisierter Zustandsvektor Zi zur Aktivierung der Ausführung eines Programms im internen Modus wird im Rechner geladen.

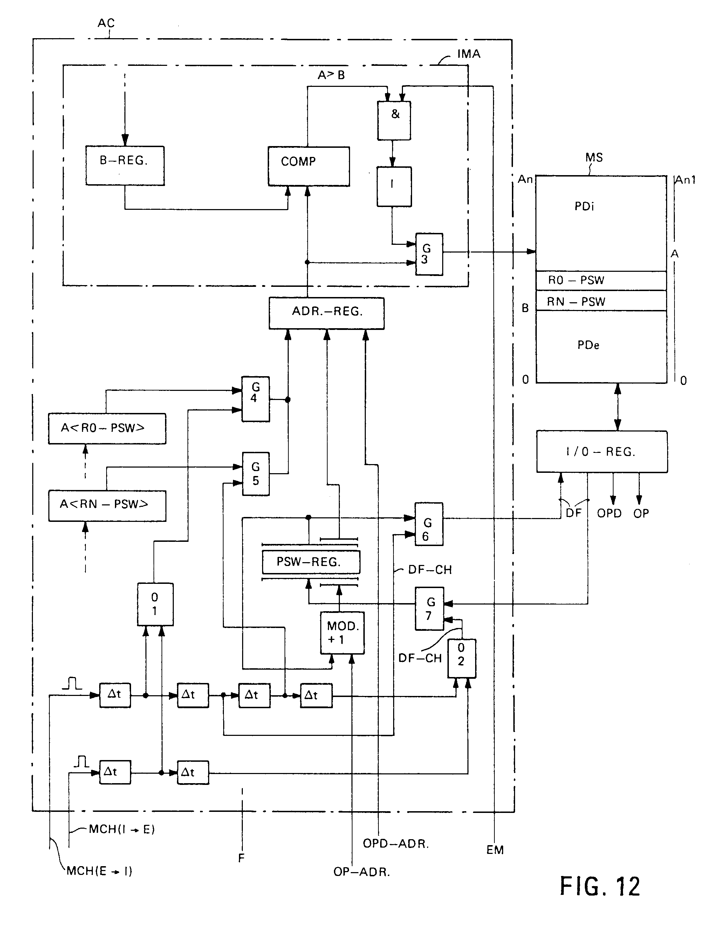

4. Eine Zugriffssperre IMA (Fig. 12) im Zugriffsmechanismus AC wird abgeschaltet.

5. Der Rechner aktiviert den gerade geladenen Zustandsvektor Zi.

Intern nach Extern: Der Basisrechner schaltet vom internen in den externen Modus um (MCH (I→ E)), wenn er sich im internen Modus befindet und den Befehl "Leave Internal Mode" LIM ausführt. Dieser Befehl gehört zur Klasse K1' (siehe auch Fig. 2) und läuft wie folgt ab:

1. Der beim letzten Umschalten vom externen in den internen Modus intern gespeicherte Zustandsvektor Ze wird im Rechner neu geladen. Dieser Zustandsvektor mag im internen Modus durch das gerade abgelaufene Programm modifiziert worden sein.

2. Die Zugriffssperre IMA im Zugriffsmechanismus AC wird wieder eingeschaltet.

3. Der Rechner aktiviert den gerade geladenen Zustandsvektor Ze.

Programme und Daten eines Rechners müssen zur Ausführungszeit im Hauptspeicher des Rechners geladen sein. Diese allgemeine Regel gilt zuerst einmal für die Programme und Daten, die im externen Modus, also dem normalen Betriebsmodus, ausgeführt werden. Da der Basisrechner im internen und externen Modus Programme und Daten bezüglich der Interpretation der Befehle gleich behandelt, müssen auch die Programme P und Daten D, die im internen Modus ausgeführt werden, im Hauptspeicher geladen sein.

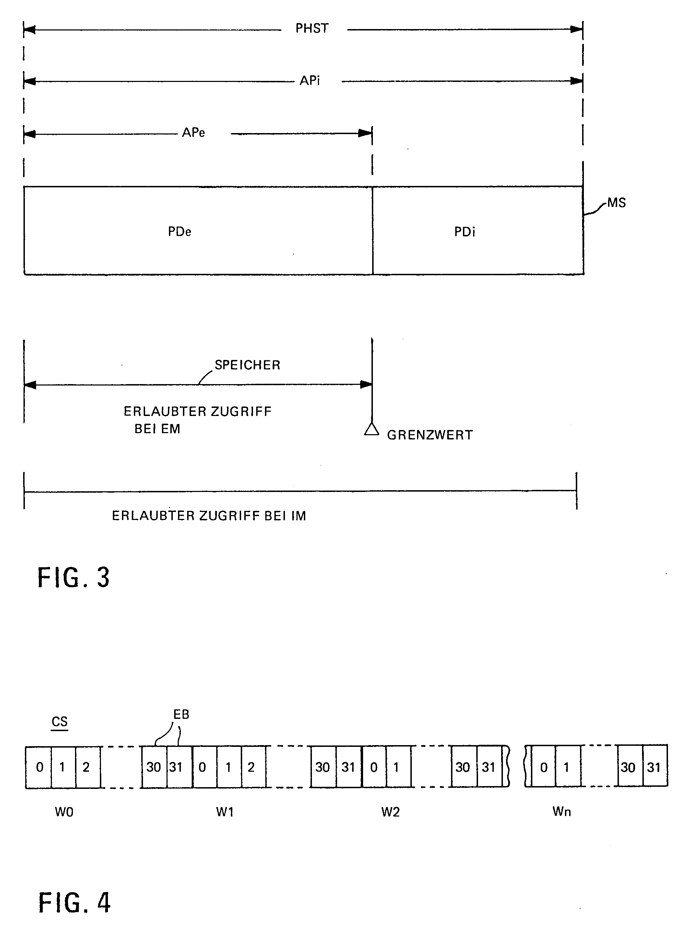

Figur 3 zeigt die Aufteilung des Hauptspeichers MS. Ein Teil des physikalisch vorhandenen Speichers PHST ist für die Programme und Daten (PDi), die im internen Modus zur Ausführung gelangen, vorgesehen. Der Rest steht für Programme und Daten (PDe) im externen Modus zur Verfügung.

Der Bereich PDi sowie die Steuervektoren CS 16-31 dienen mit zur Realisierung der Gesamtarchitektur GA und sind logisch als integraler Bestandteil des Rechners zu betrachten. Deshalb muß für Programme, die im externen Modus ausgeführt werden, der Eindruck erweckt werden, daß PDi nicht existiert. Dies wird durch die Zugriffssperre IMA erreicht, die den Zugriffsbereich APi für Programme im internen Modus auf den Zugriffsbereich APe für Programme im externen Modus begrenzt.

Dagegen müssen Programme im internen Modus bei der Realisierung der Funktionsklassen K2 und K3 auf PDi und PDe, also auf den gesamten physikalisch vorhandenen Hauptspeicher zugreifen können.

Die Zugriffssperre IMA unterbindet, wenn sie aktiv ist, alle Zugriffe des Basisrechners auf den Bereich für PDi. Der Basisrechner verhält sich in diesem Falle so, als hätte er auf eine Stelle außerhalb des physikalisch vorhandenen Hauptspeichers zugegriffen. Die Vorrichtung wird beim Moduswechsel MCH (I→E) vom internen in den externen Modus aktiviert und beim Moduswechsel MCH (E→I) vom externen in den internen Modus deaktiviert. Siehe auch die Beschreibung im Abschnitt "Moduswechsel".

Der im Folgenden beschriebene Zugriffsmechanismus AC erlaubt den Zugriff auf neue Betriebsmittel, die in der zu realisierenden Gesamtarchitektur nicht definiert sind. Der Zugriff ist nur im internen Modus erlaubt. Zusätzlich bewirkt diese Vorrichtung, daß der Basisrechner in den internen Modus geschaltet wird, wenn er sich zum Zeitpunkt einer Zustandsänderung der neuen Betriebsmittel im externen Modus befindet.

Das wesentliche Element der Vorrichtung ist das Konzept des Steuervektors CS. Ein Steuervektor ist ein linearer Adreßraum. Er wird im vorliegenden Ausführungsbeispiel durch eine natürliche Zahl (Kennzahl) im Bereich von 0 bis 31 identifiziert. Figur 4 zeigt seine allgemeine Struktur. Er besteht aus mindestens einem Wort (Wort 0) mit 32 Stellen zur Aufnahme von höchstens 32 Ereignisbits EB. Er kann aus bis zu n Wörtern bestehen, je nachdem wieviel Information er erfordert (Daten, Adressen, OP Codes etc.), um anstehende Ereignisse zu beschreiben oder darauf abgebildete externe Betriebsmittel zu beschreiben.

Figur 2 zeigt alle notwendigen Befehle für den Zugriff auf Steuervektoren:
- Der Befehl "Read Control Space" RCS erlaubt das Auslesen beliebiger Positionen eines Steuervektors CS.
- Die Befehle "And Control Space" ACS, "Exclusive Or Control Space" ACS, "Or Control Space" OCS und "Write Control Space" WCS erlauben eine Modifikation beliebiger Positionen eines Steuervektors im Sinne der angedeuteten Semantik.

5

Neue Betriebsmittel, die in der Gesamtarchitektur GA nicht definiert sind, können entweder extern zum Basisrechner BR sein, oder auch nur Bestandteile von ihm sein. Solche Betriebsmittel werden in bestimmte Positionen von Steuervektoren abgebildet. Ihr Zustand kann dann mit den oben erwähnten Befehlen verändert und getestet werden.

Es können im vorliegenden Ausführungsbeispiel maximal 32 Steuervektoren existieren. Figur 5 gibt einen Überblick. Vier Steuervektoren werden als Bestandteil der Einrichtung definiert:
- der Ereignisvektor EV,
- der Architekturvektor AV,
- der Zeittaktvektor ZV und
- der programmierbare Ereignisvektor PV.

Ist für eine bestimmte Gesamtarchitektur GA die Funktionsklasse K1 des Basisrechners festgelegt worden, so kann die Realisierung der Funktionsklasse K3 die Definition spezieller zusätzlicher Steuervektoren zSVi erforderlich machen. Ein Beispiel ist ein Steuervektor, der die Abbildung eines Adapters zum Anschluß von Eingabe- und Ausgabeeinheiten an den Basisrechner und seinen Hauptspeicher enthält. Mit diesem Steuervektor können dann die Eingabe- und Ausgabebefehle aus der Funktionsklasse K3 der Gesamtarchitektur realisiert werden.

Ein Ereignis kann den Inhalt einzelner Positionen eines Steuervektors ändern. Ein Steuervektor hat "ein Ereignis anstehen", wenn ein oder mehrere Bits im Worte O den Wert eins haben (siehe hierzu auch Figur 4). Ein anstehendes Ereignis, welches durch eine Eins in einer bestimmten Bitposition von Wort 0 identifiziert ist, wird durch das Zurücksetzen des Bits auf den Wert 0 "nicht anstehend".

Im Folgenden werden die vier Steuervektoren, die Bestandteil der Einrichtung sind, beschrieben:

Der Ereignisvektor EV hat eine Kennzahl KZ von 0. Seine Struktur ist in Figur 6 dargestellt, welche die genaue Zuordnung der EV Bits zu den Steuervektoren zeigt. Er erlaubt die schnelle Erkennung und Reaktion auf ein anstehendes Ereignis.

Der EV ist 32 Bits (1 Wort) lang. Das linke Halbwort (16 Bits) ist für Steuervektoren, die Bestandteil der Einrichtung sind, reserviert. Das rechte Halbwort (16 Bits) ist für zusätzliche Steuervektoren, die zur Realisierung von K'1 zur Bildung einer neuen Gesamtarchitektur GA erforderlich sind, reserviert. Jedes Bit identifiziert genau einen Steuervektor. Der Wert jedes Bits ist immer das logische Oder der Bits 0-31 des Wortes 0 des zugehörigen Steuervektors. Diese Definition impliziert:
- Das Setzen und Zurücksetzen jedes beliebigen Bits im Wort 0 eines Steuervektors wird sofort automatisch gemäß dem logischen Oder aller Bits 0-31 in dem zugehörigen EV-Bit reflektiert.
- Das Setzen oder Zurücksetzen eines EV-Bits mit einem geeigneten Befehl aus der Figur 2 ist wirkungslos.

Figur 6 zeigt die genaue Zuordnung der EV Bits zu den Steuervektoren.

Der Architekturvektor AV hat die Kennzahl 1. Da die spezielle Rechnerarchitektur, die realisiert werden soll, je nach Anwendung unterschiedlich sein kann, wird auf eine genaue Darstellung ihrer Struktur hier verzichtet. Die folgenden Bestandteile müssen jedoch immer vorhanden sein:

1. Ein Ereignisbit EB, welches anzeigt, daß der Basisrechner einen Befehl aus den Klassen K2 oder K3 dekodiert, aber nicht ausgeführt hat. In diesem Fall enthält der AV auch die Identifikation des dekodierten Befehls und seine bereits dekodierten Teile (Befehlstyp und Operanden)-

2. Ein oder mehrere Ereignisbits, welche anzeigen, daß Ereignisse anstehen, die nach einer weiteren Analyse im internen Modus zu bestimmten Programmunterbrechungen im externen Modus führen können.

Generell ist der AV im internen Modus die Schnittstelle zu den Elementen der Gesamtarchitektur, die zur Realisierung von Funktionen der Klassen K2 und K3 benötigt werden.

Der Zeitvektor ZV hat die Kennzahl 2. Seine Struktur ist in Figur 7 dargestellt.

Der ZV dient zur zeitlichen Steuerung der Programme im internen Modus und zur Zeitüberwachung externer Betriebsmittel.

Der ZV enthält zwei Zähler: Einen Zeitintervallzähler IT und einen Zeitzähler CT. Beide Zähler ändern sich unter Kontrolle von Bit 0 im Wort 3. Hat dieses Bit den Wert eins, so werden die Zähler mit dem Zeittakt (z.B. von 3.3 Millisekunden) geändert. Andernfalls werden die Zählerwerte nicht geändert. IT wird dekrementiert, CT wird inkrementiert.

Der ZV hat ein Ereignis anstehen, wenn IT den Wert 0 durchläuft und Bit 1 im Wort 3 den Wert eins hat.

Im Gegensatz zu IT ist der Zeitzähler CT ein reiner Zähler und kann im ZV kein Ereignis erzeugen.

Der programmierbare Ereignisvektor PV hat die Kennzahl 3. Er erlaubt die Erzeugung von Ereignissen per Programm mit den Befehlen für Steuervektoren aus Figur 2. Er dient zur Kontrolle des Programmflusses im internen Modus.

Der PV ist 1 Wort zu beispielsweise 32 Bits lang. Da die einzelnen Bits in Wort O Ereignisbits sind, können bis zu 32 verschiedene Ereignisse erzeugt werden, indem diese Bits auf den Wert eins gesetzt werden. Die Bedeutung der einzelnen Bits kann durch Abmachungen festgelegt werden.

Als Beispiel zur Erläuterung der Wirkungsweise der Erfindung wird die Ausführung eines Befehls aus K2 oder K3 beschrieben (vgl. Figur 8).

Dieser Vorgang läuft wie folgt ab:

1. Der Basisrechner BR arbeitet im externen Modus EM und liest den Befehl INS aus dem Bereich PDe des Hauptspeichers MS aus.

2. Er dekodiert den Befehl im Hardware Mikrocode Interface W/MC-IF durch den Dekodierer DEC 1.

3. Er erkennt, daß er den Befehl nicht ausführen kann ($\neq$K1), da Befehle aus K2 oder K3 aus seiner Sicht ungültig sind.

4. Er speichert die Hauptspeicheradresse, den Befehlstyp OP und die Operanden OPD des Befehls INS im AV ab und setzt im AV das Ereignisbit EB, welches das Ereignis "ungültiger Befehl" anzeigt, auf den Wert eins.

5. Dies verursacht, daß im EV das Bit 1 auf den Wert eins gesetzt wird. Damit zeigt der EV ein Ereignis an.

6. Dies hat zur Folge, daß der Rechner mittels MCH-SW einen Moduswechsel MCH (E$\rightarrow$ I) vom externen EM in den internen Modus IM ausführt.
   - Die Zugriffssperre IMA wird deaktiviert. Damit haben die nachfolgenden Programme Zugriff auf die Betriebsmittel PDi und PDe.
   - Der Zustandsvektor des Programms Ze wird vom Rechner intern abgespeichert.
   - Ein Zustandsvektor Zi wird aktiviert. Dieser identifiziert einen Mechanismus, bzw. ein allgemeines Programm zur Dekodierung von Ereignissen (Dekodierer 2/3), welches nun ausgeführt wird.

7. Der Dekodierer DEC 2/3 im internen CPU Interface I/CPU-iF liest den EV aus und erkennt, daß der AV ein Ereignis enthält.

8. Im AV Wort 0 erkennt er, daß ein Befehl nicht ausgeführt werden konnte. Er liest den Befehlstyp aus dem AV aus und kann mit seiner Hilfe den Mechanismus, bzw. das Programm EXEC K2/3 zur Ausführung des Ursprungsbefehls identifizieren und aktivieren.

9. Dieser Mechanismus setzt das Ereignisbit "ungültiger Befehl" im Wort 0 des AV auf den Wert null. Damit wird vom Rechner automatisch Bit 1 im EV auf null gesetzt, und das Ereignis steht nicht mehr an.

10. Ist der Ursprungsbefehl aus der Klasse K2, so werden sämtliche Befehle des Ausführungsmechanismus, bzw. des Ausführungsprogramms aus der Klasse K1 sein. Ist der Ursprungsbefehl aus der Klasse K3, so wird der Ausführungsmechanismus, bzw. das Ausführungsprogramm neben Befehlen aus K1 auch Befehle aus K1' enthalten. Dieses hat einen Rückgriff auf EXEC K1 zur Folge, es sei denn, der hierzu nötige Mechanismus wäre auch in EXEC K2/3 zusätzlich eingebaut.

11. Als letzten Befehl aus der Menge K1' führt das Programm den Befehl "Leave Internal Mode (LIM)" aus. Hierzu ist das Programm oder die Befahlsroutine so aufgebaut, daß LIM der letzte Befehl der Routine ist.

12. Dies führt dazu, daß der Rechner einen Moduswechsel MCH (I$\rightarrow$ E) vom internen Modus IM in den externen Modus EM ausführt.
   - Die Zugriffssperre, die alle Zugriffe des Rechners auf PDe beschränkt, wird wieder aktiviert.
   - Der intern abgespeicherte Zustandsvektor Ze wird wieder geladen.

13. Damit ist der Befehl aus K2 oder K3 erfolgreich durchgeführt worden und das im externen Modus unterbrochene Programm wird weiter ausgeführt.

Wenn der Decodierer DEC2/3 den Befehl INS ebenfalls nicht decodieren kann, beispielsweise weil er weder ein Befehl der Klasse K2 oder K3 ist, dann wird eine Unterbrechung IRRPT durchgeführt, die den Rechner zur Durchführung einer Fehlerroutine F in den externen Modus EM umschaltet.

Die Adressen für den Hauptspeicher MS werden von einem Zugriffsmechanismus AC bereitgestellt, der auch andere Steuersignale liefert, wie beispielsweise Steuersignale DF-CH zum Umschalten des Datenflusses DF.

Der Verkehr mit dem Hauptspeicher wird ferner über ein Ein-/Ausgaberegister I/O-REG abgewickelt, das den Operationscode OP sowie die Operanden OPD eines Befehls bereitstellt. Die Datenflußrichtung, d.h. vom Hauptspeicher in das Register oder von diesem Register in den Hauptspeicher wird durch die bereits genannten Datenfluß-Steuersignale DF-CH bestimmt.

Der zwischen dem Hardware/Mikrocode Interface HW/MC-IF und dem internen CPU Interface I/CPU-IF angeordnete Modusumschalter MCH-SW besteht aus einem Intern/Extern-Diskriminator I/E-DIS und einem Extern/Intern-Diskriminator E/I-DIS sowie einem Extern/Intern/Extern-Umschalter M-SW, der das Moduszustandssignal EM oder IM und das Moduswechselsignal MCH (E→I) oder MCH (I→E) erzeugt. Die Richtung des Zustandswechsel, beispielsweise von extern nach intern, wird in Klammern angegeben mit (E→I), bzw. (I→E).

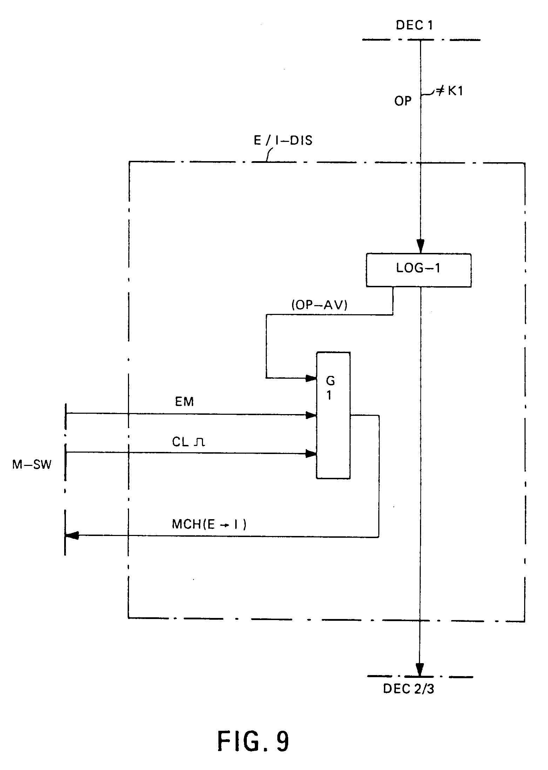

Die Aufbereitung der Operandenadressen OPD-ADR und der Operanden OPD selbst, ist in üblicher Weise Aufgabe der Befehlsausführungsmechanismen EXEC (K1-3), welche die Operandenadressen erzeugen, sie dem Zugriffsmechanismus AC des Hauptspeichers MS zuführen und die ausgelesenen Operanden zum Zwecke der Weiterverarbeitung übernehmen. Das Prinzip des Diskriminators E/I-DIS für die Feststellung eines Modus- oder Zustandswechsel von extern nach intern ist in Fig. 9 dargestellt. Operationscodes OP von Befehlen, die nicht der Klasse K1 angehören, werden auf ihrem Wege zu dem Decodierer 2/3 im Diskriminator über eine Logikschaltung LOG-1 geleitet, die immer dann ein Ausgangssignal OP-AV abgibt, wenn ein Operationscode auf dem genannten Übertragungswege zur Verfügung steht. Da Befehle dieser Art nur im internen Modus verarbeiten können, muß, wenn sich der Rechner im externen Modus befindet, ein Moduswechsel durchgeführt werden. Ein hierzu erforderliches Steuersignal wird in einer Torschaltung G1 gewonnen, die entsprechend einer UND-Verknüpfung die Signale OP-AV, das Zustandssignal für den externen Modus EM, und ein Taktsignal CL kombiniert und bei Koinzidenz ein Ausgangssignal MCH (E→I) erzeugt, das für einen Moduswechsel von extern nach intern representativ ist und zum Moduswechselschalter M-SW übertragen wird, wo es die tatsächliche Einstellung des internen Zustandes bewirkt. Diese Zustandsänderung muß entfallen, wenn sich der Rechner bei der vorangehenden Befehlsausführung bereits im internen Zustand befand. In diesem Fall fehlt dann eines der Steuersignale, nämlich EM, für die Torschaltung G1.

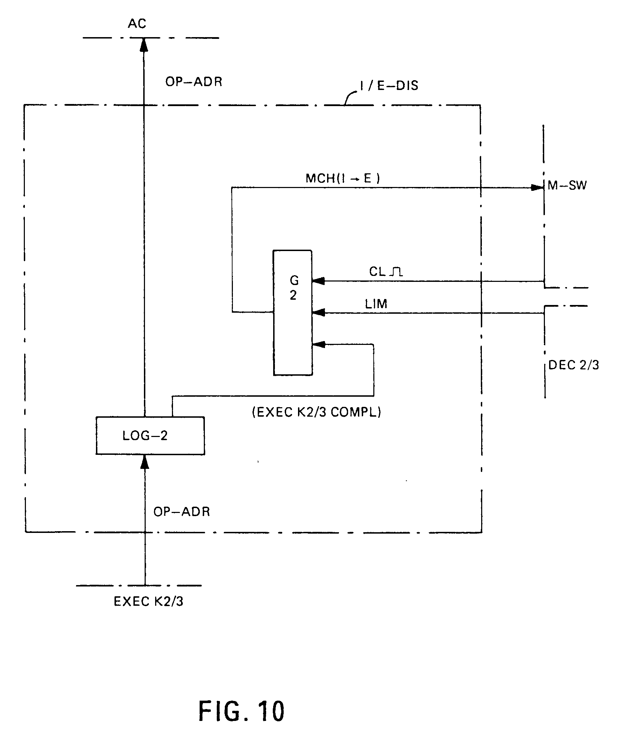

Die prinzipielle Arbeitsweise des Diskriminators I/E-DIS für die Feststellung eines Zustandsübergangs von dem internen Zustand IM in den externen Zustand EM geht aus Figur 10 hervor. Nach der Ausführung eines Befehls in dem Befehlsausführungselement EXEC K2/3 wird die Adresse OP-ADR des nachfolgenden Befehls zur Adressiereinheit ADR übertragen. Diese Übertragung erfolgt über den I/E-Diskriminator. Die in diesem Diskriminator befindliche Logikschaltung LOG-2 stellt die Befehlsadresse, welche die Adresse des Operationscodes OP ist, fest und erzeugt ein Steuersignal EXEC K2/3 COMPL, das die vollständige Ausführung des gerade beendeten Befehls anzeigt. Dieses Signal ist eines von drei Steuersignalen einer Torschaltung G2, das diese Signale gemäß einer UND-Funktion miteinander verknüpft. Die anderen Signale sind das Taktsignal CL sowie das Signal LIM, das von dem LIM-Befehl erzeugt wird, welcher der letzte Befehl eines Programms ist und das Verlassen des internen Modus veranlaßt. Die Torschaltung G2 erzeugt demzufolge ein Moduswechselsignal MCH(I→E), das zum Moduswechselschalter M-SW übertragen wird, der die Modus- oder Zustandsumschaltung vom internen Modus IM zurück in den externen Modus EM vornimmt.

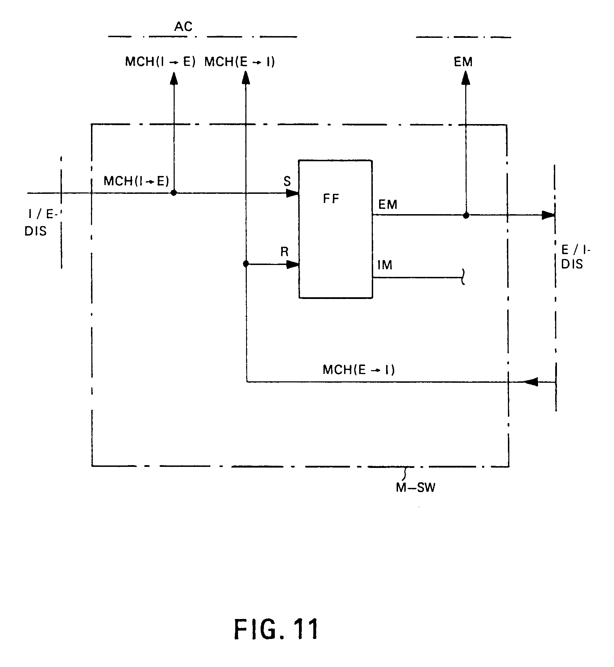

Der eigentliche Moduswechsel MCH wird von dem Modusumschalter M-SW gesteuert, der in Figur 11 näher dargestellt ist. Der Modusumschalter besteht im wesentlichen aus einem Flip-Flop FF, das vom Moduswechselsignal MCH (I→E) gesetzt wird und dabei das Ausgangssignal EM, das den externen Zustand kennzeichnet, erzeugt und zu dem E/I-Diskriminator E/I-DIS überträgt.

Zurückgestellt wird das Flip-Flop FF durch das Moduswechselsignal MCH (E→I), das vom E/I-Diskriminator übertragen wird. Sowohl das Einstellsignal (S), das vom I/E-Diskriminator übertragen wird, als auch das Rückstellsignal (R) werden zum Zugriffsmechanismus AC übertragen, wo dann die eigentlichen Umschaltvorgänge ausgelöst werden.

Der in Figur 12 dargestellte Zugriffsmechanismus AC, welcher die Adressierung des Hauptspeichers MS sowohl für Lese- als auch für Schreibvorgänge vornimmt, besteht aus dem klassischen Adressenregister ADR-REG sowie einer Zugriffssperre IMA, die im externen Modus EM des Rechners und bei gleichzeitigem Vorliegen einer Adresse, die jenseits eines Grenzwertes B liegt, wirksam wird. Dieser Grenzwert B ist, unter Umständen von einer Sicherheitszone abgesehen, die Adresse der letzten Speicherstelle des Speicherbereichs für Programme und Daten PDe, auf den Befehle der Klasse K1 ausschließlich zugreifen dürfen. Allgemein gesehen, befinden sich in ihm die sogenannten ersten Betriebsmittel.

Für die Verarbeitung von Befehlen, die den Klassen K2 und K3 (K1′) angehören, müssen ferner zusätzliche zweite Betriebsmittel PDi, CS16-31 zur Verfügung stehen, was im vorliegenden Falle bedeutet, daß auch der Speicherbereich für Programme und Daten PDi im Hauptspeicher MS zugreifbar sein muß. Dazu muß die Zugriffssperre IMA inaktiviert werden.

Die Zugriffssperre besteht aus einem Vergleicher COMP, der die im Adressenregister ADR-REG befindliche Adresse A mit dem Grenzwert (Grenzwertadresse) B vergleicht, welch letztere beispielsweise aus einem Register B-REG oder aus einem Speicherbereich des Hauptspeichers verfügbar gemacht wird.

EP 0 273 070 B1

Der Vergleicher erzeugt immer dann ein Ausgangssignal, wenn A > B ist. Das Ausgangssignal des Vergleichers wird einer $\epsilon$-Schaltung zugeführt, die über zwei Eingänge verfügt, deren anderer Eingang mit dem Signal EM beaufschlagt wird, das das Vorliegen des externen Modus anzeigt. Das Ausgangssignal der UND-Schaltung wird über einen Inverter I einer Torschaltung G3 zugeführt, an deren anderem Eingang die Adresse A aus dem Adressenregister anliegt. Auf Grund des dem einen Eingang vorgeschalteten Inverters wird die Torschaltung G3 immer dann zur Übertragung der anliegenden Adresse zu dem Speicher fähig sein, wenn die invertierte Koinzidenzbedingung der UND-Schaltung $\epsilon$ erfüllt ist. Die invertierte Koindidenzbedingung ist immer dann erfüllt, wenn das Signal EM nicht anliegt, was der Fall ist, wenn sich der Rechner im internen Modus IM befindet oder eine Adresse A anliegt, die kleiner als die Grenzwertadresse B ist oder diese Bedingungen beide vorliegen.

Die folgende Wahrheitstabelle zeigt die Bedingungen für die Aktivierung bzw. Deaktivierung der Zugriffssperre IMA

| COMP | EM | EM (IM) | BETRIEBSMITTEL |
|------|----|---------|----------------|
| A > B | Ø | 1 | PDi |
| A ≤ B | 1 | 1 | PDe |

Der Datenfluß DF, wie er hier verstanden sein soll, ist die Verbindung zwischen dem Ein-/Ausgangsregister I/O-REG des Hauptspeichers und dem Programmstatuswortregister PSW-REG, welches das Programmstatuswort PSW enthält. Dieses Programmstatuswort enthält alle wichtigen Angaben über den Zustand der augenblicklichen Verarbeitung eines Programms, so daß, wenn ein Programm zu Gunsten eines anderen unterbrochen werden muß, durch den Austausch der Programmstatuswörter derart, daß das Programmstatuswort des unterbrochenen Programms in ein bestimmtes Register oder in eine bestimmte Speicherstelle gerettet werden muß und das Programmstatuswort des nun zu verarbeitenden Programms von seinem Speicherort in das Programmstatuswortregister geladen wird, jeweils von der Unterbrechungsstelle aus weiterverarbeitet werden kann. Die Umschaltung der Datenflußrichtung erfolgt mit Hilfe von Datenflußwechselsignalen DF-CH, welche an die Torschaltungen G6 oder G7 angelegt werden. Zwei aus Verzögerungsgliedern $\triangle$ t bestehende Laufzeitketten, die mit den Moduswechselsignalen jeweils beaufschlagt werden, die eine mit dem Moduswechselsignal MCH (I→E) und die andere mit dem Moduswechselsignal MCH (E→I). An den entsprechenden Abgriffen dieser Laufzeitketten werden die Steuersignale DF-CH sowie Steuersignale für die Torschaltungen G4 und G5 erzeugt, die den Inhalt bestimmter Speicherstellen des Bereiches PDi als Adressen zu dem Adressenregister ADR-REG übertragen. Diese bestimmten Speicherstellen enthalten die Information RO-PSW über den Wiederstart des Programms im externen Modus bzw. RN-PSW über den Start des Programms im internen Modus. RO-RSW ist Untermenge von Ze, RN-PSW von Zi.

Das wesentliche Element der Zugriffsschaltung AC in Figur 12 ist also die Zugriffssperre IMA, die den Zugriff bei der Verarbeitung von Befehlen, die verschiedenen Klassen angehören, auf die entsprechenden ersten Betriebsmittel PDe und zusätzlich dazu auf zweite Betriebsmittel PDi steuert.

**Patentansprüche**

1. Einrichtung zur Erweiterung des Befehlssatzes eines Rechners (CPU), der eine erste Klasse (K1) von nicht-redundanten Basisbefehlen und eine zweite Klasse (K2) von Befehlen, die vollständig mit Hilfe der nicht-redundanten Basisbefehle realisierbar sind, mittels eines Basisrechners (BR) ausführt, dadurch gekennzeichnet, daß ferner eine dritte Klasse (K3) von Befehlen, unterstützt wird, die zusätzliche Betriebsmittel (PDi) erfordert und mit Hilfe der nicht-redundanten Basisbefehle (K1) sowie mit einer Klasse (K1') von Sonderbefehlen realisierbar ist; dabei dienen diese Sonderbefehle zum Testen und Manipulieren von zusätzlichen Steuervektoren (CS16-31) auf die diese zusätzlichen Betriebsmittel abgebildet sind, die Befehle dieser dritten Klasse (K3) sind, mittels der folgenden Zusatzbestandteile ausführbar:
   - Ein Schaltmechanismus (MCH-SW), der den Basisrechner von seinem externen Modus (EM), in welchem er Befehle und Mikroprogramme zur Realisierung von Befehlen der ersten Klasse ausführt, in einen internen Modus (IM) schaltet, wenn er Befehle der zweiten und dritten Klasse ausführen soll, wobei zwei Basissteuervektoren (CS0-15) zur Übergabe dieser Befehle (AV) und zur Speicherung des aktuellen Zustands (ZV) vor Umschaltung, zur späteren Wiederaufnahme des Programms im externen Modus, dienen und in welchem internen Modus ein befehlsspezifi-

9

sches Mikroprogramm ausgeführt wird, das aus den genannten Basisbefehlen bzw. aus Befehlen der genannten Sonderklasse (K1') besteht, und welcher Schaltmechanismus den Basisrechner durch ein Steuersignal (LIM) wieder in den externen Modus zurückschaltet, wenn die Ausführung des genannten befehlsspezifischen Mikroprogramms beendet ist;

- Eine Zugriffssperre (IMA), in einem Zugriffsmechanismus (AC) des Hauptspeichers (MS), die im externen Modus den Speicherzugriff auf die zur Befehlsinterpretation und -ausführung der Basisbefehle vorhandenen Mikroprogramme, Daten und Basissteuervektoren (CS0-15) und somit mit den Basisrechner auf die Benutzung seiner Basisbetriebsmittel (PDE) begrenzt, welche Zugriffssperre aber im internen Modus den Zugriff auf Mikroprogramme, Daten (PDI) und jene zusätzlichen Steuervektoren (CS16-31) einschließlich der genannten Sonderbefehle zur Interpretation und Ausführung von Befehlen der zweiten und dritten Klasse erweitert, und somit die genannten zusätzlichen Betriebsmittel einbindet;

- Ein Steuermechanismus (EXEC 2/3), der mittels dieser Sonderbefehle (K1') die Manipulation dieser zusätzlichen Steuervektoren (CS0-16) vornimmt und damit diese Einbindung der zusätzlichen Betriebsmittel ermöglicht.

2. Einrichtung nach Anspruch 1, dadurch gekennzeichnet, daß der Schaltmechanismus (MCH-SW) Diskriminatoren (I/E-DIS, E/I-DIS) aufweist, die einen Wechsel des Zustandes (IM, EM) feststellen, in dem der Rechner sich gerade befindet und die entsprechenden Indikatoren (MCH(I→ E),MCH(E→ I)) von Zustandswechseln liefern und zu einem Moduswechselschalter (M-SW) übertragen, der die genannten Indikatoren auswertet, im externen Zustand des Rechners einen Zustandsindikator (EM) erzeugt, diesen zu dem einen Diskriminator (E/I-DIS) überträgt und der die genannten Indikatoren dem Zugriffsmechanismus (AC) für eine Modusumschaltung verfügbar macht.

3. Einrichtung nach Anspruch 1 und/oder 2, dadurch gekennzeichnet, daß der eine Diskriminator (E/I-DIS) durch die Koinzidenz eines Signales (OP-AV), das die Ungültigkeit eines Befehls nach Prüfung durch einen ersten Dekodierer (DEC1) angibt, eines Signals, das den externen Zustand (EM) des Rechners kennzeichnet und eines Taktsignals (CL) aktiviert wird, wobei er die genannten Indikatoren (EM,MCH-(E→ I)) erzeugt.

4. Einrichtung nach einem oder mehreren der Ansprüche 1-3, dadurch gekennzeichnet, daß der andere Diskriminator (I/E-DIS) durch die Koinzidenz eines Signals (EXEC 2/3 COMPL), das die vollständige Ausführung eines Befehls aus den Klassen 2 oder 3 angibt, eines Signals (LIM), das aus dem letzten Befehl eines Programms, bestehend aus Befehlen der Klassen 2 und/oder 3 abgeleitet wurde und eines Taktsignals (CL) aktiviert wird, wobei er den genannten Indikator (MCH(I→ E)) erzeugt.

5. Einrichtung nach einem oder mehreren der Ansprüche 1-4, dadurch gekennzeichnet, daß der Umschalter (M-SW) aus einem bistabilen Speicherelement (FF) besteht, das von dem einen Indikator (MCH(I→ E)) gesetzt wird, wobei er den Indikator (EM) für den externen Zustand erzeugt und das von dem anderen Indikator (MCH(E→ I)) zurückgesetzt wird, wobei er den Indikator (IM) für den internen Zustand erzeugt.

6. Einrichtung nach einem oder mehreren der Ansprüche 1-5, dadurch gekennzeichnet, daß der Zugriffsmechanismus (AC) ein Adressenregister (ADR-REG) aufweist, das einen Zugriff auf die ersten und zweiten Betriebsmittel (PDe, PDi) gestattet sowie über eine Zugriffssperre (IMA) verfügt, die einen Zugriff des Adressenregisters auf die zweiten Betriebsmittel sperrt, wenn ein Vergleichselement (COMP) feststellt, daß ein in einem Adressengrenzwert-Register (B-REG) befindlicher Grenzwert (B) kleiner als die anliegende Adresse (A) ist und der Rechner sich im externen Modus befindet, indem er ein zwischen das Adressenregister und die Betriebsmittel geschaltetes Übertragungstor (G3) sperrt.

7. Verfahren zur Erweiterung des Befehlssatzes eines Rechners (CPU), der eine erste Klasse (K1) von nicht-redundanten Basisbefehlen und eine zweite Klasse (K2) von Befehlen, die vollständig mit Hilfe der nicht-redundanten Basisbefehle realisierbar sind, mittels eines Basisrechners (BR) ausführt, dadurch gekennzeichnet, daß zur Ausführung von Befehlen einer dritten Klasse (K3), die zusätzliche Betriebsmittel benötigen sowohl nicht-redundante Basisbefehle (K1) als auch eine Klasse (K1') von Sonderbefehlen zum Testen und Manipulieren von zusätzlichen Steuervektoren (CS16-31) zur Verfügung steht, wobei diese zusätzlichen Betriebsmittel auf diese zusätzlichen Steuervektoren abgebildet sind und folgende Verfahrensschritte durchgeführt werden:

1. der im externen Modus (EM) arbeitende Basisrechner, der in diesem Modus durch einen Speicherzugriffsmechanismus (IMA) nur zugriff auf einen begrenzten Speicherbereich (APe) mit den zur Interpretation und Ausführung der Basisbefehle notwendigen Mikroprogrammen und Daten (PDE) hat, liest aus diesem Speicherbereich einen Befehl (INS) aus;

2. ein erster Decodierer (DEC1) im Hardware-Interface (HW/MC-IF) des Rechners decodiert den Befehl;

3. einen Befehl der ersten Klasse (K1) erkennt er als einen für ihn gültigen Befehl und überträgt ihn zur Ausführung zu einem ersten Ausführungsmechanismus (EXEC1);

4. einen Befehl einer anderen Klasse (K2, K3) erkennt er als für ihn ungültig, und der Basisrechner speichert die Adresse des Befehls, seinen Operationscode (OP) sowie seine Operanden (OPD) in einem Architekturvektor (AV) ab, in welchem ein Ereignisbit (EB) zum Zeichen, daß ein ungültiger Befehl vorliegt, gesetzt wird;

5. dieses bewirkt auch in einem Ereignisvektor (EV) das Setzen eines Ereignisbits (EB), welches das Vorliegen eines ungültigen Befehls und somit eines Ereignisses kennzeichnet;

6. der Rechner führt daher einen Moduswechsel (MCH(E→ I)) vom externen (EM) in den internen Modus (IM) durch, in welchem er Befehle der zweiten und dritten Klasse (K2, K3) ausführen kann;
   - dadurch wird ein Zugriffsmechanismus (AC) so eingestellt, daß die nachfolgenden Befehle Zugriff auf einen erweiterten Speicherbereich (APi) haben, der den begrenzten Speicherbereich (APE) miteinschließt und Mikroprogramme und Daten (PDe und PDi) zur Interpretation und Ausführung der Befehle der zweiten und dritten Klasse enthält;
   - ein Zustandsvektor (Ze) des Rechners, der zur weiteren Ausführung des augenblicklich aktiven Programms im externen Modus erforderlich ist, wird vom Rechner intern gespeichert;
   - der Rechner lädt einen standardisierten Zustandsvektor (Zi), zur Aktivierung eines Programms, das im internen Modus abläuft;

7. ein zweiter Decodierer (DEC 2/3) im internen CPU Interface (ICPU-IF) liest den Ereignisvektor (EV) aus und erkennt, daß der Architekturvektor (AV) ein Ereignis (EB = 1) enthält;

8. im Architekturvektor erkennt der zweite Decodierer (DEC 2/3), daß der Befehl (INS) nicht ausgeführt werden konnte und liest den Operationscode dieses Befehls, der sich im Architekturvektor befindet, aus, decodiert und überträgt ihn zu einem zweiten Ausführungsmechanismus (EXEC 2/3) der diesen Befehl ausführt;

9. dabei wird vom zweiten Ausführungsmechanismus das Ereignisbit, das den ungültigen Befehl anzeigte im Wort 0 des Architekturvektors wieder zurückgesetzt;

10. gehört der ursprüngliche Befehl (INS) zur zweiten Klasse (K2), dann sind sämtliche verwendeten Befehle des zweiten Ausführungsmechanismus aus der ersten Klasse (K1); gehört der ursprüngliche Befehl (INS) dagegen zur dritten Klasse (K3), dann sind die verwendeten Befehle des zweiten Ausführungsmechanismus neben Befehlen aus der ersten Klasse (K1) auch aus der Sonderklasse (K1'), wobei in beiden Fällen der erste Ausführungsmechanismus (EXEC 1) rekursiv verwendet wird;

11. mit dem letzten Befehl (LIM) einer Befehlsfolge, die im internen Modus ausgeführt wird, erzeugt der zweite Dekodierer (DEC 2/3) ein Steuersignal, das den Rechner vom internen Modus in den externen Modus (MCH(I→ E)) umschaltet, wodurch

12. der Zugriffsmechanismus AC wird wieder so eingestellt, daß er Zugriffe des unterbrochenen Programms nur auf den eingeschränkten Speicherbereich (APe) gestattet, wobei

13. der intern gespeicherte Zustandsvektor (Ze) wieder zurückgeladen und das im externen Modus des Rechners unterbrochene Programm fortgesetzt wird.

## Claims

1. Device for extending the instruction set of a processor (CPU) which, utilizing a basic computer (BR), executes a first class (K1) of non-redundant basic instructions and a second class (K2) of instructions fully realizable with the aid of said non-redundant basic instructions,
   characterized in that furthermore a third class (K3) of instructions are supported which require additional resources (PDi) and which are realizable by said non-redundant basic instructions (K1) as well as a class (K1') of special instructions, said special instructions serving to test and manipulate additional control vectors (CS16-31) onto which said additional resources are imaged, the instructions of said third class (K3) being executable by the following additional components:
   - a switch mechanism (MCH-SW) switching the basic computer from its external mode (EM), in which it executes instructions and microprograms for realizing instructions of said first class, to an internal mode (IM) for executing instructions of said second and third classes, wherein two basic control vectors (CSO-15) serve to transfer said instructions (AV) and to store the actual status (ZV) prior to switching for resuming the program in the external mode later on, said internal mode being used to execute an instruction-specific microprogram respectively consisting of said basic instructions and said instructions of said special class (K1'), said switch mechanism resetting the basic computer by a control signal (LIM) to the external mode after said instruction-specific microprogram has been executed;

- an access blocker (IMA) in an access mechanism (AC) of the main storage (MS), which in the external mode limits the storage access to the microprograms provided for instruction interpretation and execution, to data and basic control vectors (CS0-15) and thus the basic computer to utilizing its basic resources (PDe), but which in the internal mode extends such access to microprograms, data (PDi) and said additional control vectors (CS16-31) including said special instructions for interpreting and executing instructions of said second and third classes, thus integrating said additional resources;

- a control mechanism (EXEC 2/3) which, by means of said special instructions (K1'), manipulates said additional control vectors (CS0-16), thus enabling the integration of said additional resources.

2. Device as claimed in claim 1,
characterized in that the switch mechanism (MCH-SW) comprises discriminators (I/E-DIS, E/I-DIS) which detect a change in the current computer status (IM, EM) and which supply the associated indicators (MCH(I->E),MCH(E->I)) of status changes, transmitting them to a mode change switch (M-SW) which evaluates said indicators, generates a status indicator (EM) in the external status of the processor, transfers said status indicator to one discriminator (E/I-DIS), and provides said indicators to the access mechanism (AC) for a mode change.

3. Device as claimed in claim 1 and/or 2,
characterized in that one discriminator (E/I-DIS) is activated by the coincidence of a signal (OP-AV) indicating the invalidity of an instruction after examination by a first decoder (DEC1), of a signal denoting the external status (EM) of the processor, and of a clock signal (CL), with said discriminator generating the indicators (EM,MCH(E->I).

4. Device as claimed in any one or a combination of the claims 1 to 3,
characterized in that the other discriminator (I/E-DIS) is activated by the coincidence of a signal (EXEC 2/3 COMPL) indicating that an instruction of the classes 2 or 3 has been executed, of a signal (LIM) derived from the last instruction of a program consisting of instructions of said classes 2 and/or 3, and of a clock signal (CL), with said discriminator generating the indicator (MCH(I->E).

5. Device as claimed in any one or a combination of the claims 1 to 4,
characterized in that the switch (M-SW) consists of a bistable storage element (FF) which is set by one indicator (MCH(I->E), said switch generating said indicator (EM) for the external status, and which is reset by said other indicator (MCH(E->I)), with said switch generating the indicator (IM) for the internal status.

6. Device as claimed in any one or a combination of the claims 1 to 5,
characterized in that the access mechanism (AC) comprises an address register (ADR-REG) which permits access to first and second resources (PDe, PDi), as well as an access blocker (IMA) blocking the access of the address register to the second resources in response to a comparator (COMP) indicating that a threshold value (B) in an address threshold register (B-REG) is smaller than the address (A) applied, and in response to the processor being in the external mode blocking a transmission gate (G3) interconnected between the address register and the resources.

7. Method of extending the instruction set of a processor (CPU) which, utilizing a basic computer (BR), executes a first class (K1) of non-redundant basic instructions and a second class (K2) of instructions fully realizable by means of said non-redundant basic instructions,
characterized in that for executing instructions of a third class (K3), which require additional resources, there are both non-redundant basic instructions (K1) and a class (K1') of special instructions for testing and manipulating additional control vectors (CS16-31), said additional resources being imaged onto said additional control vectors and the following method steps being implemented:

1. the basic computer operating in the external mode (EM) and which in this mode, utilizing a storage access mechanism (IMA), is only capable of accessing a limited storage area (APe) with the microprograms and data (PDe) required for interpretation and execution of the basic instructions, reads an instruction (INS) from said storage area;

2. a first decoder (DEC1) in the hardware interface (HW/MC-IF) of the processor decodes the instruction;

3. an instruction of the first class (K1) is detected as a valid instruction and transmitted for execution to a first execution mechanism (EXEC1);

4. an instruction of another class (K2, K3) is detected as invalid, and the basic computer stores the address of said instruction, its operational code (OP) as well as its operands (OPD) in an architecture vector (AV) in which an event bit (EB) is set to indicate that there is an invalid instruction;

5. this causes an event bit (EB) being also set in an event vector (EV) to denote the existence of an invalid instruction and thus an event;

6. in response, the processor performs a mode change (MCH(E->I)) from the external (EM) to the internal mode (IM) in which it is capable of executing instructions of the second and third classes (K2, K3);

- this causes an access mechanism (AC) to be set in such a manner that the subsequent instructions are capable of accessing an extended storage area (APi) which includes the limited storage area (APe) and which contains microprograms and data (PDe and PDi) for interpreting and executing the instructions of the second and third classes;
- a status vector (Ze) of the processor, which is required for further executing the currently active program in the external mode, is internally stored by the processor;
- the processor loads a standardized status vector (Zi) for activating a program running in the internal mode;

7. a second decoder (DEC 2/3) in the internal CPU interface (I/CPU-IF) reads the event vector (EV) and detects that the architecture vector (AV) contains an event (EB = 1);

8. in the architecture vector, the second decoder (DEC 2/3) detects that the instruction (INS) could not be executed, and reads the operational code of said instruction contained in the architecture vector, decodes and transmits it to a second execution mechanism (EXEC 2/3) implementing said instruction;

9. in that process, the second execution mechanism resets the event bit indicating the invalid bit in the word 0 of said architecture vector;

10. if the original instruction (INS) belongs to the second class (K2), all instructions used by said second execution mechanism are of the first class (K1); alternatively, if said original instruction (INS) belongs to the third class (K3), then the instructions used by said second execution mechanism are of the first class (K1) and the special class (K1'), with said first execution mechanism (EXEC1) being recursively used in both cases;

11. by the last instruction (LIM) of an instruction sequence executed in the internal mode, the second decoder (DEC 2/3) generates a control signal which switches the processor from the internal to the external mode (MCH(I->E)), so that

12. the access mechanism (AC) is set such that the interrupted program is permitted access only to the limited storage area (APe), with

13. the internally loaded status vector (Ze) being reloaded, and the program interrupted in the external mode of the processor being continued.

**Revendications**

1. Dispositif pour l'extension du jeu d'instructions d'un calculateur, lequel au moyen d'un calculateur de base traite un premier type (K1) d'instructions de base non-redondantes ainsi qu'un deuxième type (K2) d'instructions, ces dernières instructions pouvant être exécutées intégralement à l'aide des instructions non-redondantes, caractérisé en ce qu'il permet en outre à l'aide d'éléments supplémentaires (PDi) le traitement d'un troisième type (K3) d'instructions et qu'il permet de plus au moyen d'éléments supplémentaires (PDi) et des instructions de base non-redondantes (K1) de traiter un troisième type (K3) d'instructions en même temps qu'un type (K1') d'instructions particulières en testant et traitant ces instructions particulières au moyen de vecteurs de commande supplémentaires (CS16 à 31) sur lesquels sont représentés les éléments supplémentaires, les instructions de ce troisième type (K3) pouvant être exécutées à l'aide des composants suivants :

13

- un commutateur (MCH-SW) qui commande le calculateur de base en un mode externe (EM), mode dans lequel ce dernier manipule des instructions et exécute un microprogramme permettant l'exécution d'instructions du premier type, qui bascule en un mode interne (IM) pour exécuter des instructions des deuxième et troisième types, deux vecteurs de commande de base (CSo-IS) servant en même temps à transmettre ces instructions (AV) et à mémoriser l'état effectif (ZV) avant commutation afin de permettre le rappel ultérieur du programme en mode externe, mode dans lequel un microprogramme d'instructions spécifiques est exécuté, lequel est constitué desdites instructions de base c'est-à-dire particulières (K1'), ce commutateur du calculateur de base basculant de nouveau en mode externe au moyen d'un signal de commande (LIM) lorsque l'exécution du microprogramme constitué desdites instructions particulières est terminée
- un masque d'accès (IMA) situé dans le mécanisme d'accès (AC) de la mémoire principale (MS) restreint en mode externe l'accès des microprogrammes, données et vecteurs de commande de base (CS 0 à 15) présents pour l'interprétation des instructions et l exécution des instructions de base de même que le calculateur de base est limité à l'utilisation de son élément fonctionnel (PDE), en mode interne toutefois, ce masque d'accès s'agrandit à l'accès au microprogramme donné (PDi) et à chaque vecteur de commande supplémentaire (CS 16 à 31) en incluant lesdites instructions particulières pour l'interprétation et l'exécution des instructions des deuxièmes et troisième types et, en conséquence, ledit élément fonctionnel est connecté,
- Un mécanisme de commande (EXEC 2/3) manipule au moyen de ces instructions particulières (K1') et permet ainsi l'intégration de l'élément fonctionnel supplémentaire.

2. Dispositif selon la revendication 1, caractérisé en ce que le commutateur (MCH-SW) est constitué de discriminateurs (I/E-DIS, E/I-DIS) qui indiquent avec précision un changement d'état (IM, EM) du calculateur, délivrent à un commutateur de changement de mode les indicateurs correspondants (MCH (I->E), MCH (E->I)), lequel, en réponse, produit un indicateur d'état (EM) qui correspond au mode externe du calculateur et est délivré au discriminateur (E-I DIS), le commutateur appliquant au mécanisme à'accès (AC) lesdits indicateurs pour permettre d'effectuer la commutation de mode.

3. Dispositif selon la revendication 1 et/ou 2, caractérise en ce qu'il délivre au discriminateur (E-I DIS) un signal de coïncidence (OP-AV) qui indique l'invalidité d'une instruction après vérification dans un premier décodeur (DEC 1) et active un signal qui indique le mode externe du calculateur de même qu'un signal de synchronisation (CL), le discriminateur produisant ainsi ledit indicateur (EM, MCH (E->I).

4. Dispositif selon l'une quelconque des revendications 1 à 3, caractérisé en ce que l'autre discriminateur (I/E-DIS) permet l'exécution intégrale d'une instruction du type 2 ou 3 par la coïncidence d'un signal (EXEC 2/3 COMPL) avec un signal (LIM) dérivé de la dernière instruction d'un programme constitué d'instructions du type 2 et/ou 3 sur activation d'un signal de synchronisation, produisant ainsi ledit indicateur (MCH (I->E)).

5. Dispositif selon l'une quelconque des revendications 1 à 4, caractérisé en ce que le commutateur (M-SW) est constitué d'une bascule (FF) qui passe à un en fonction de l'indicateur (MCH (I->E), produisant ainsi l'indicateur de mode externe (EM) et repasse à zéro en fonction de l'autre indicateur (MCH (E->I) produisant ainsi l'indicateur de mode externe (IM).

6. Dispositif selon l'une quelconque des revendications 1 à 5, caractérisé en ce que le mécanisme d'accès (AC) comporte un registre d'adresse (ADR-REG) permettant d'accéder à des premier et second éléments fonctionnels (PDe, PDi) ainsi qu'un masque d'accès (IMA) prévu pour masquer un accès du registre d'adresse au second élément fonctionnel après détermination par un élément de comparaison (COMP), qu'une valeur limite (B) qui est positionnée dans un registre de valeurs limites d'adresses (B-REG) est inférieure à celle de l'adresse (A) contiguë, le calculateur se trouvant en mode externe, celui-ci masquant un registre de transfert d'adresse invalidé (G3) située entre le registre d'adresse et l'élément fonctionnel.

7. Méthode d'extension du jeu d'instructions d'un calculateur (CPU) lequel au moyen d'un calculateur de base traite un premier type (K1) d'instructions de base non-redondantes ainsi qu'un deuxième type (K2) d'instructions, ces dernières instructions pouvant être exécutées intégralement à l'aide des instructions non-redondantes, caractérisée en ce qu'un élément fonctionnel supplémentaire permet l'exécution d'instructions d'un troisième type (K3) pour laquelle on dispose, en outre, non seulement d'instructions de base non-redondantes (K1) mais aussi d'un type (K1') d'instructions particulières servant à tester et traiter des vecteurs de commande supplémentaires (CS16 à 31), ces éléments fonctionnels étant représentés sur ces vecteurs de commande supplémentaires et exécutés selon le découpage suivant :

1. Le calculateur de base opérant en mode externe (EM) accède, au moyen d'un mécanisme d'accès mémoire (IMA) seulement à une zone mémoire partielle (APe) qui comporte le microprogramme et les données nécessaires pour l'interprétation et l'exécution des instructions de base et en extrait une instruction (INS)

2. Un premier décodeur (DEC1) situé dans l'interface-matériel (HW/MC-IF) du calculateur décode l'instruction.

3. Une instruction du premier type (K1) reconnaît celle-ci comme valide et l'envoie pour exécution à un premier mécanisme d'exécution (EXEC1).

4. Une instruction d'un autre type (K2, K3) la reconnaît comme non-valide et le calculateur de base mémorise l'adresse de l'instruction, son code opération (OP) de même que son opérande (OPD) dans un vecteur d'architecture (AV) dans lequel un bit d'incident (EB) signé indiquera l'invalidité de l'instruction précente.

5. Ceci entraîne en outre le positionnement du bit d'incident (EB) dans un vecteur d'incident (EV) lequel établit la présence d'une instruction non-valide et, par suite, d'un incident.

6. Le calculateur effectue, en conséquence, un changement de mode (MCH (E->I)) du mode externe (EM) en mode interne (IM) dans lequel il peut exécuter des instructions des deuxième et troisième types (K2, K3).

- le mécanisme d'accès (AC) se positionne ainsi de façon à ce que les instructions suivantes accèdent à une zone mémoire agrandie (APi) et incorpore celles-ci à la zone mémoire partielle (APE), le mécanisme d'accès comprenant le microprogramme et les données (PDe, PDi) permettant l'interprétation et l'exécution des instructions des deuxième et troisième types ;
- un vecteur d'état (Ze) du calculateur, nécessaire pour l'exécution ultérieure instantanée du programme activé en mode externe, est mémorisé dans le calculateur.
- le calculateur charge un vecteur d'état (Zi) normalisé pour activer un programme qui se déroule en mode interne.

7. Un deuxième décodeur (DEC 2/3) situé dans l'interface CPU interne (CPU-IF) extrait le vecteur d'incident (EV) et décode que le vecteur d'architecture comporte un incident (EB = 1),

8. Le deuxième décodeur (DEC 2/3) décode dans le vecteur d'architecture qu'il n'est pas possible de délivrer l'instruction INS et extrait le code opération de cette instruction qui se trouve dans le vecteur d'architecture, décode celui-ci et l'envoie au deuxième mécanisme d'exécution (EXEC 2/3) qui délivre cette instruction,

9. Le bit d'incident en provenance du deuxième mécanisme d'exécution est à nouveau repositionné à zéro dans le vecteur d'architecture,

10. L'instruction initiale appartient au deuxième type (K2), les instructions supplémentaires utilisées dans le deuxième mécanisme d'exécution proviennent du premier type (K1), l'instruction initiale (INS) appartient par contre au troisième type (K3), les instructions utilisées dans le deuxième mécanisme d'exécution parallèlement aux instructions du premier type (K1) sont également dérivées du type d'instructions particulières (K1') d'où il résulte que dans les deux cas le mécanisme d'exécution (EXEC 1) sera utilisé de manière récursive,

11. Le deuxième décodeur (DEC 2/3) au moyen de la dernière instruction (LIM) d'une série d'instructions fournies en mode interne produit un signal de commande qui sera commuté par le calculateur du mode interne en mode externe (MCH (I->E)), d'où il résulte que

12. Le mécanisme d'accès (AC) est de nouveau positionné de manière à permettre l'accès du programme restreint seulement à la zone mémoire limitée (APe),

13. Le vecteur d'état (Ze) mémorisé en interne est chargé de nouveau et le programme restreint se poursuit dans le calculateur en mode externe.

FIG. 1

| I N S | |
|---|---|
| AND CONTROL SPACE | NCS |
| EXCLUSIVE OR CONTROL SPACE | XCS |
| LEAVE INTERNAL MODE | LIM |
| OR CONTROL SPACE | OCS |
| READ CONTROL SPACE | RCS |
| WRITE CONTROL SPACE | WCS |

FIG. 2

FIG. 3

FIG. 4

EP 0 273 070 B1

CS

| | 0 | 1 | 2 | 3 | 4 | "" | 15 | 16 | 17 | 18 | 19 | "" | 31 |
|---|---|---|---|---|---|---|---|---|---|---|---|---|---|
| W0 | EV | AV | ZV | PV | / | "" | / | zSV1 | zSV2 | zSV3 | / | "" | / |
| W1 | | | | | | | | | | | | | |
| W2 | | | | | | | | | | | | | |
| W3 | | | | | | | | | | | | | |
| " " " | | | | | | | | | | | | | |
| Wn | | | | | | | | | | | | | |

## FIG. 5

EV

| 0 | 1 | 2 | 3 | 4 | """ | 15 | 16 | 17 | 18 | 19 | "" | 31 |
|---|---|---|---|---|---|---|---|---|---|---|---|---|
| KZ | AV | ZV | PV | | | | zSV1 | zSV2 | zSV3 | | | |

## FIG. 6

EB

| W0 | 0 | // | 31 |
|---|---|---|---|
| W1 | IT | | |
| W2 | CT | | |
| W3 | 0 | 1 | // | 31 |

ES
CS/S

## FIG. 7

FIG. 8

DEC 1

OP ⌐ ≠ K1

E / I–DIS

LOG–1

(OP–AV)

G 1

EM

CL ⎍

M–SW

MCH(E → I)

DEC 2/3

# FIG. 9

FIG. 10

FIG. 11

FIG. 12

23